(19) Europäisches Patentamt

European Patent Office

Office européen des brevets

(11) **EP 1 296 088 A1**

(12) **EUROPEAN PATENT APPLICATION**
published in accordance with Art. 158(3) EPC

(43) Date of publication:
26.03.2003 Bulletin 2003/13

(51) Int Cl.$^7$: **F16L 15/06**

(21) Application number: 01938549.1

(86) International application number:
**PCT/JP01/04798**

(22) Date of filing: 07.06.2001

(87) International publication number:
**WO 01/094831 (13.12.2001 Gazette 2001/50)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: 07.06.2000 JP 2000170336

(71) Applicants:
• **SUMITOMO METAL INDUSTRIES, LTD.**
**Osaka-shi, Osaka 541-0041 (JP)**
• **VALLOUREC MANNESMANN OIL & GAS FRANCE**
**59620 Aulnoye-Aymeries (FR)**

(72) Inventors:
• **MAEDA, Jun**
**Ashiya-shi Hyogo 659-0071 (JP)**
• **NAGASAKU, Shigeo**
**Nishinomiya-shi Hyogo 663-8104 (JP)**
• **SUMITANI, Katsutoshi**
**Amagasaki-shi Hyogo 661-0014 (JP)**

(74) Representative: **Senior, Alan Murray**
**J.A. KEMP & CO.,**
**14 South Square,**
**Gray's Inn**
**London WC1R 5JJ (GB)**

(54) **TAPER THREADED JOINT**

(57) The gap L (mm) which is the smaller of the gap $L_1$ (mm) between the crest 1a of a tapered male thread 1 and the root 2b of a tapered female thread 2, and the gap $L_2$ (mm) between the root 1c of the tapered male thread 1 and the crest 2c of the tapered female thread 2, the load flank angle $\alpha(°)$ and the stab flank angle $\beta$ (°), and the axial gap $\delta$(mm) which forms in the width-wise direction and is the difference between the thread ridge width of the tapered male thread 1 and the thread valley width of the tapered female thread 2 threadingly engaged therewith have the following relationship

$$\delta \leq L \cdot (\tan\alpha + \tan\beta)$$

When interference of the threaded portions is necessary, the initial set thread interference H is H > 2L.

As a result, a thread having sufficient resistance to tensile force and compressive force can be easily manufactured within manufacturing tolerances. In particular, it has good sealing properties and increased reliability as a threaded joint for an oil well pipe having a metal seal portion.

*Fig. 1*

EP 1 296 088 A1

**Description**

Technical Field

This invention relates to a joint with tapered threads for connecting oil well pipes, for example, to each other.

Background Art

When tapered threads are connected, a male thread and a female thread threadingly engage with each other. Tightening is prevented from proceeding, and relative movement in the radial direction of the threads is also prevented when not only contact between the load flanks but also contact between the crest of the male thread and the root of the female thread, or between the root of the male thread and the crest of the female thread, or between the stab flanks on the opposite (back) side from the load flanks occur. Normally, tightening is prevented when either the crest or the root of the male thread contacts the opposite thereof, and the male thread and the female thread are prevented from further threaded engagement.

If the tightening force (torque) is further increased from the above-described state, the male thread and the female thread respectively undergo deformation by radial contraction or deformation by radial expansion, and they together generate a tightening force between them. The sum of the deformation of both members is referred to as the amount of thread interference. The tightening force is adjusted for a usual tapered thread so as to suitably limit the extent of this interference. Normally, the tightening force of threads is made slightly large so as to prevent loosening of threads and to adequately resist tensile forces. Most of conventional tapered threads have this structure.

A joint with tapered threads which is used primarily to join tubular members has a structure such that a load is applied to the load flanks of a thread by an axial direction reaction force caused by the above-described thread interference, and such that due to the reaction force of the root of the male thread (or the female thread) caused by this load and the thread interference, tight coupling is achieved without looseness in the axial direction or the radial direction.

Even when a tensile load is applied in the axial direction to tapered threads which have once been tightened, since the load flanks are contacting from the initial period of tightening, relative movement between the male thread and the female thread in the direction of tension is not produced. This state is maintained until the tensile force exceeds the strength of the threads.

However, normally, a gap is present between the stab flanks of threads. In such cases, a compressive force in the axial direction is opposed only by the resistance of the root of the tapered male thread or the tapered female thread, and by the frictional resistance produced by the contact force of the tapered surface. The contact force is generated by the interference applied to the threaded portion. Accordingly, although it varies somewhat with the magnitude of the taper, the resistance to a compressive force in the axial direction is considerably smaller compared to the case of a tensile force in the axial direction of a thread. Namely, a usual tapered thread cannot withstand even a relatively small compressive force. Relative axial movement corresponding to the size of the axial gap, which is normally present between the stab flanks of a male thread and a female thread, is inevitable.

When a stopper for limiting the amount of tightening is provided near a threaded portion, the stopper resists the above-described compressive force in the axial direction. But due to structural limitations, the area of the contact portion of the stopper must be smaller than the cross-sectional area of the pipe body. Though the resistance against tension by the threads can be made large enough to equal the strength of the pipe body, the resistance against compression is considerably smaller than the strength of the pipe body. Accordingly, the threads cannot withstand a compressive force in the axial direction exceeding this limit. The stopper portion deforms and relative movement in the axial direction takes place, with movement taking place by just the size of the above-described gap between the stab flanks of the threads.

When a metal seal portion is provided, as in many oil well pipes, in particular, in order to guarantee the sealing properties of the thread connecting portions, the sealing properties are greatly affected by the above-described axial movement, frequently resulting in loss in sealing properties.

In order to adequately resist this axial compressive force, it is necessary to do away with the gaps between the stab flanks of threads and to provide contact between the stab flanks in the same manner as between the load flanks, at least at the time of connecting the threads. A thread having a structure in which the gaps between load flanks and stab flanks are eliminated and contact takes place has already been conceived (see, for example, Japanese Published Unexamined Patent Application Hei 9-119564).

However, taking into consideration manufacturing tolerances in actual manufacture, even in threads within manufacturing tolerances, it is difficult to make the load flanks and the stab flanks of the thread always contact. In fact, when it is necessary for both the load flanks and the stab flanks to contact, various dimensional conditions are adjusted separately, and a suitable dimensional relationship is selected by itself. Thus, gaps develop between the stab flanks and effective resistance against compressive force is not obtained.

In Japanese Published Unexamined Patent Application Hei 9-119564, a threaded joint for oil well pipes having a structure in which both the load flanks and the stab flanks contact at the time of coupling is proposed. There is, however, no concrete description at all as to what type of structure is employed to provide such threads as that both the load flanks and the stab flanks contact at the time of coupling. It no more than states that both the load flanks and stab flanks of threads are contacting.

Disclosure of the Invention

The object of this invention is to provide a joint with tapered threads which has a thread shape with which gaps between the load flanks and the stab flanks of threads are eliminated and with which it is possible for the surfaces thereof to always contact in order to generate a sufficient resisting force against compressive forces in the axial direction.

According to the present invention, a joint with tapered threads is defined by the relationship $\delta \leq L \cdot (\tan\alpha + \tan\beta)$ wherein

the value L (referred to below as the "upper or lower gap L of a thread") of whichever is smaller of the gap $L_1$ between the crest of a tapered male thread and the root of a tapered female thread or the gap $L_2$ between the root of a tapered male thread and the crest of a tapered female thread,

the load flank angle $\alpha$,

the stab flank angle $\beta$, and

the difference between the thread ridge width of the tapered male thread and the thread valley width of the tapered female thread threadingly engaged therewith or between the thread ridge width of the tapered female thread and the thread valley width of the tapered male thread, i.e., the maximum value $\delta$ of an axial gap which can be formed in the widthwise direction of the threads.

As a result, it is possible to manufacture a joint with tapered threads which can maintain a state of contact between the load flanks and stab flanks at all times under any conditions.

Brief Description of the Drawings

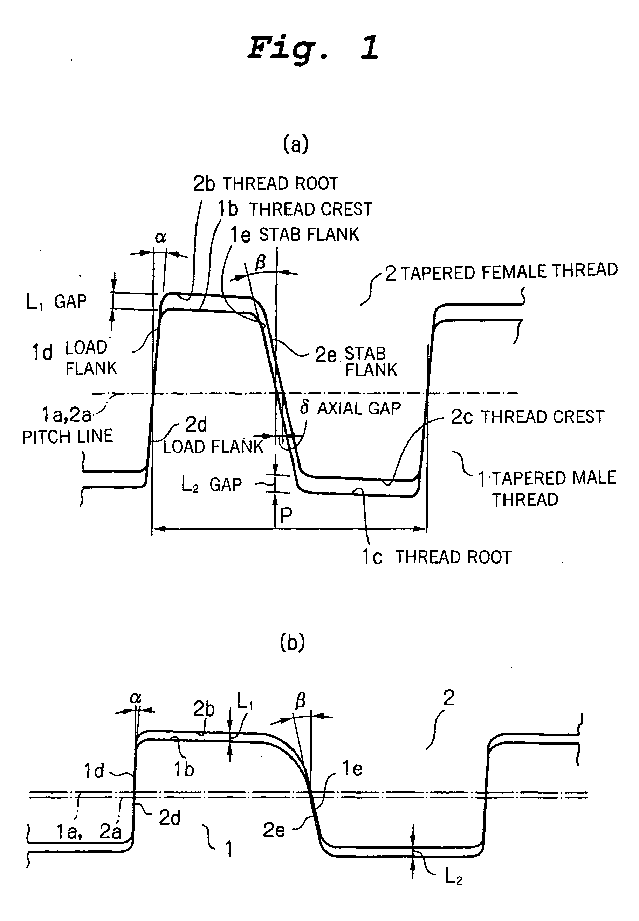

Figure 1 schematically explains the threaded portions used in a joint with tapered threads according to the present invention, Figure 1(a) being a schematic explanatory view showing an initial state in which the pitch lines of a tapered male thread and a tapered female thread coincide, and Figure 1(b) being a schematic explanatory view showing a state in which the load flanks and the stab flanks contact at the time of tightening.

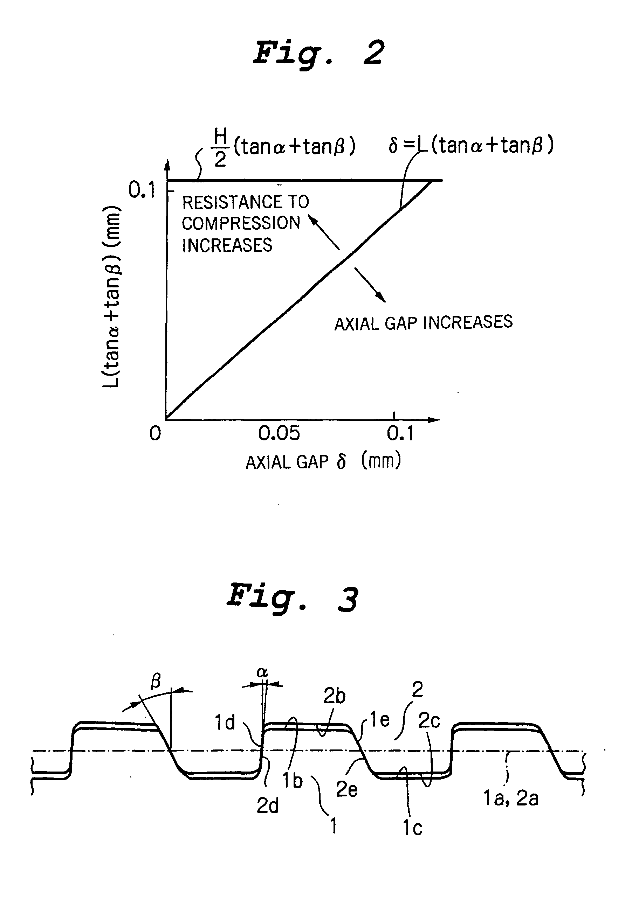

Figure 2 is a graph showing thread coupling conditions for contact between the load flanks and the stab flanks.

Figure 3 is a schematic view showing the state in which both surfaces are contacting by coincidence of the pitch radii in a state of actual thread engagement in order to manufacture threads in which both the load flanks and the stab flanks contact.

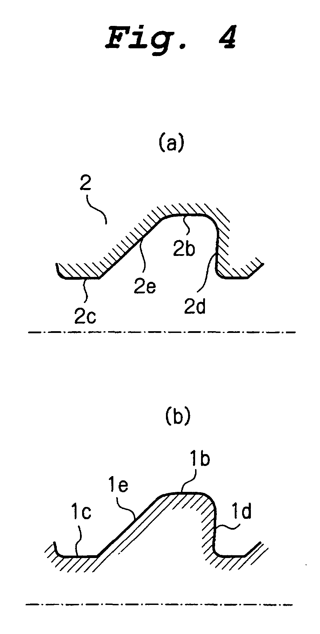

Figure 4 shows the case in which a tapered male thread and a tapered female thread are separately designed and drawn in order to manufacture threads in which both the load flanks and stab flanks contact, Figure 4(a) being a schematic explanatory view showing a tapered female thread, and Figure 4(b) being a schematic explanatory view showing a tapered male thread.

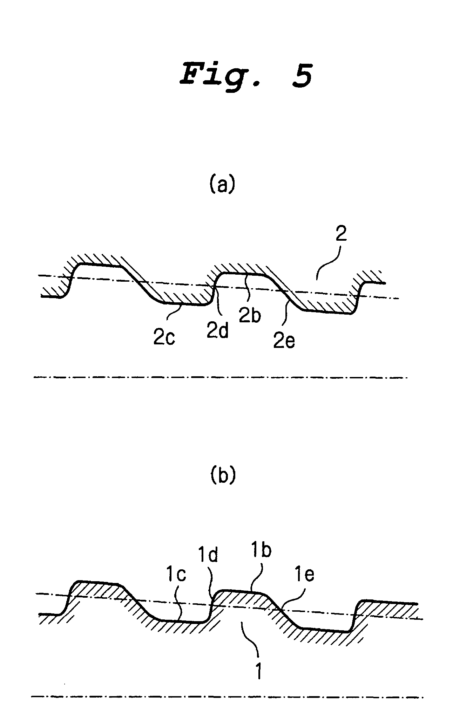

Figure 5 shows the case in which a tapered male thread and a tapered female thread are separately designed and drawn in order to manufacture threads in which both the load flanks and the stab flanks contact, Figure 5(a) being a schematic explanatory view showing a tapered female thread and Figure 5(b) being a schematic explanatory view showing a tapered male thread.

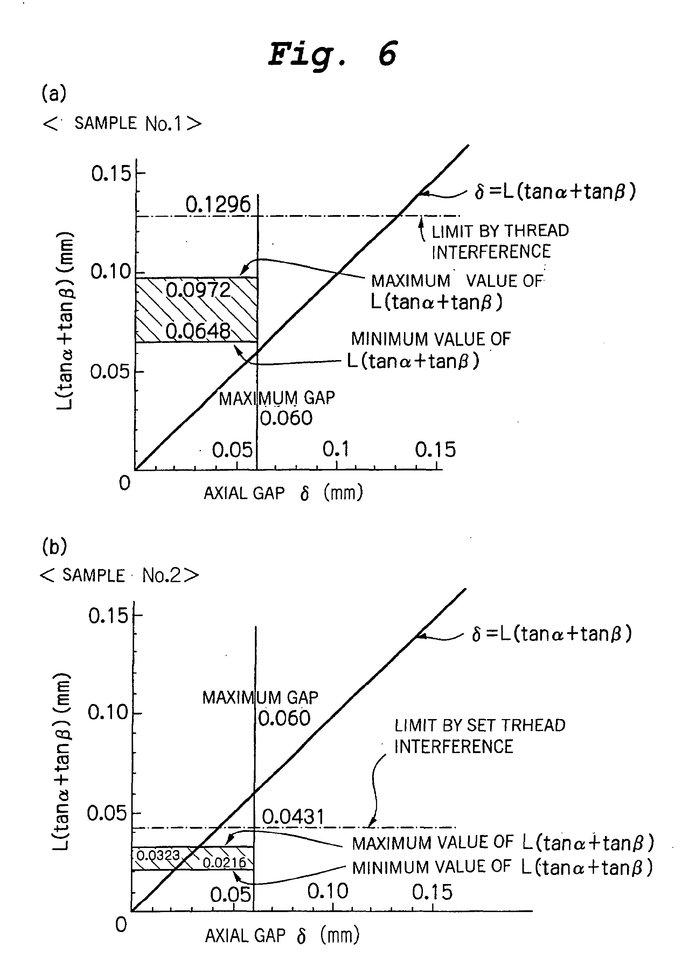

Figure 6 shows the connected state of threads in which both the load flanks and the stab flanks contact, Figure 6(a) being a schematic explanatory view showing the case in which the conditions of the present invention are satisfied, and Figure 6(b) being a schematic explanatory view showing the case including a region which does not satisfy the conditions of the present invention.

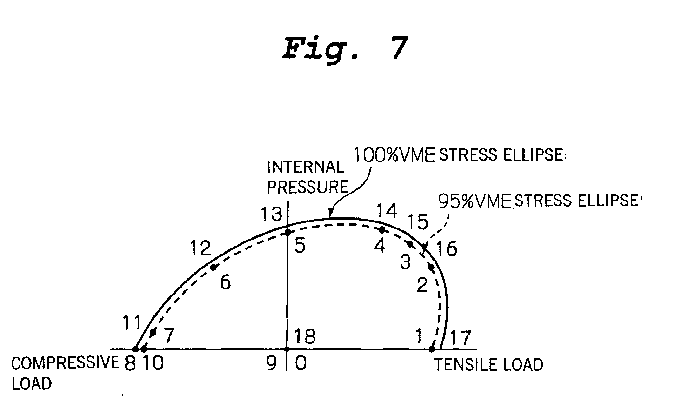

Figure 7 is an explanatory view of the load acting on a test material in a combined test.

Best Mode for Carrying Out the Invention

A male thread and a female thread are joined to each other to form a joint with tapered threads. In order to maintain a state in which the load flanks and the stab flanks always contact each other, it is necessary for not only the load flanks but also for the stab flanks to contact before the crest or the root of a tapered male thread contacts the root or the crest of a tapered female thread in a state of threaded engagement of the threads. A load in the radial direction of the threads (produced by the amount of interference between the threads and the like) can be resisted by both the load flanks and the stab flanks.

When threadingly engaging a tapered male thread and a tapered female thread, the tapered male thread and the tapered female thread move relative to each other in the radial direction. The size of the gap which is formed between the crest and the root of the tapered male thread and the root and the crest of the tapered female thread (the amount of possible movement in the radial direction) must be such as to make the axial gap along the pitch line between the thread ridge width and the thread valley width end up as zero during the process of thread tightening. Normally, since the load flanks are contacting, at the initial stage of thread tightening, the axial gap corresponds to the gap between the stab flanks.

Namely, in the case of trapezoidal threads, the ridge of a thread enters into the valley during the process of thread tightening. The axial gap between the thread ridge and the thread valley of the threads gradually decreases and becomes narrow. When relative movement in the radial direction of the tapered male thread and the tapered female thread stops, the decrease stops. Accordingly, the decrease in the axial gap on the pitch line during this threaded engagement should be larger than the initial axial gap between the stab flanks.

The maximum value of the decrease in the axial gap on the pitch line is related to the angle $\alpha$ of the thread load flanks, the angle $\beta$ of the thread stab flanks, and the "upper or lower gap L of the threads". The maximum value is expressed by $L \cdot (\tan\alpha + \tan\beta)$. This value must be larger than the initial axial gap $\delta$ along the pitch line between the stab flanks.

For this relationship, it is not always necessary for the thread ridge width (the thread valley width) to be constant, and it can also be applied in cases in which it increases or decreases at a fixed rate, or in which the thread height (or the thread root depth) increases or decreases at a constant rate. The same relationship is established as long as the axial gap $\delta$ is made the smallest value of the gap between the stab flanks, even if the shape of the load flanks and the stab flanks is different for the male thread and the female thread.

In order to connect tapered threads, the above-described amount of thread interference is typically necessary, and the method of imparting this amount of interference is typically to make the point in time at which the pitch lines of the male thread and the female thread coincide the starting point for interference. In this case, the amount of possible movement L' in the radial direction between the male thread and the female thread (= "upper or lower gap L between the threads") has the effect of decreasing this thread interference. Therefore, the effective thread interference (H') becomes (H - 2L'). Namely, in such a case, the relationship H > 2L' between the interference H and the gap L' of possible movement in the radial direction is necessary.

If the thread interference is too large, an excessive tensile stress in the circumferential direction is produced in the female thread. In order to avoid this, normally a method is employed in which the thread tightening torque is limited, or a method is employed in which the thread tightening position is limited (a specific example of this method is use of a stopper). In either case, the limit on the interference in the present invention should be investigated and limited to (H - 2L'). In this case, the relationship between L and $\delta$ is subject to the limitations of the set value H of the thread interference.

These relationships are expressed by the following equation.

$$H > 2L$$

A joint with a tapered thread according to this invention is constituted in accordance with such a technical idea. According to this invention, the thread shapes of a tapered male thread and a tapered female thread threadingly engaged with each other have a constant cross section over the entire length of a complete thread portion. The "upper or lower gap L between threads" (mm), the load flank angle $\alpha$ (°), the stab flank angle $\beta$ (°), and the difference between the thread ridge width of the tapered male thread and the thread valley width of the tapered female threadingly engaged therewith, i.e., the axial gap $\delta$ (mm) which develops along the widthwise direction of the threads have the relationship

$$\delta \le L \cdot (\tan\alpha + \tan\beta).$$

In this relationship, the thread load flank angle $\alpha$ (°) and the thread stab flank angle $\beta$ (°) are positive in the direction facing the center of a thread ridge, i.e., in the direction facing each other. $\delta$ is a value including manufacturing tolerances.

These relationships are applicable to a tapered male thread and a tapered female thread in which the thread height is constant and the widths of the thread ridges, i.e., the thread ridge widths are variable thread ridge widths which gradually increase or gradually decrease at a constant rate for both the tapered male and female threads. These relationships are also applicable to a tapered male thread and a tapered female thread which only the thread heights are variable thread heights which gradually increase or gradually decrease at a constant rate for both the tapered male and female threads.

The relationships for a joint with tapered threads employed in the present invention will be explained using Figure 1.

Figure 1(a) shows the state in which the pitch lines 1a and 2a of a tapered male thread 1 and a tapered female thread 2 coincide. This state is made an initial state of thread connection. The gap $L_1$ (mm) between the thread crest 1b of the tapered male thread 1 and the thread root 2b of the tapered female thread 2, the gap $L_2$ (mm) between the thread root 1c of the tapered male thread 1 and the thread crest 2c of the tapered female thread 2, the value of the gap (referred to below as "the upper or lower gap") L (mm) which is the smaller of these gaps $L_1$ and $L_2$, the angle $\alpha$ (°) of the load flanks 1d and 2d, the angle $\beta$ (°) of the stab flanks 1e and 2e, and the difference between the thread ridge width and the thread valley width of the engaging tapered male thread 1 and the tapered female thread 2, i.e., the axial gap $\delta$ (mm) which is formed along the widthwise direction of the threads are made initial values, and they are values which are calculated using the dimensions on drawings including manufacturing tolerances.

If tightening of the tapered male thread 1 with respect to the tapered female thread 2 further continues from the state shown in Figure 1(a), the tapered male thread 1 and the tapered female thread 2 rub against each other on the load flanks 1d and 2d. The tapered male thread 1 and the tapered female thread 2 move with respect to each other in the radial direction while sliding along the load flanks, and the gaps $L_1$ and $L_2$ between the thread crests and roots decrease. In addition, the axial gap $\delta$ also decreases.

As tightening of the tapered male thread 1 with respect to the tapered female thread 2 proceeds further, if the upper or lower gap L first disappears, the relative movement in the radial direction of the tapered male thread 1 and the tapered female thread 2, i.e., sliding on the load flanks 1d and 2d becomes impossible although an axial gap $\delta$ remains in the widthwise direction of the threads. During subsequent tightening, the tapered male thread 1 and the tapered female thread 2 both undergo radial deformation, and a correspondingly high tightening torque becomes necessary. Connection is completed when tightening has been performed up to a previously set torque or relative position.

However, in this case, a slight axial gap $\delta$ is present in the widthwise direction of the threads, and a tightened state in which both the load flanks and stab flanks contact is not achieved. In contrast, if the upper or lower gap L does not first become zero but the axial gap $\delta$ becomes zero at the same time or first, as shown in Figure 1(b), a state is achieved in which there is contact between the load flanks 1d and 2d and the stab flanks 1e and 2e at that time.

If the thread pitch is P and the thread taper is 1/T, the changes $\Delta L$ and $\Delta\delta$ in the upper or lower gap L and the axial gap $\delta$ due to tightening by one relative rotation of the tapered male thread 1 with respect to the tapered female thread 2 become $\Delta L = P/2T$ and $\Delta\delta = (P/2T)\cdot(\tan\alpha + \tan\beta)$.

The axial gap $\delta$ can be made zero at the same time or before the upper or lower gap becomes zero by establishing the relationship $(L/\Delta L) \geq (\delta/\Delta\delta)$. Accordingly, if $\Delta L = P/2T$ and $\Delta\delta = (P/2T)\cdot(\tan\alpha + \tan\beta)$ are substituted into this relationship, $\delta \leq L\cdot(\tan\alpha + \tan\beta)$ results.

Accordingly, when the relationship $\delta \leq L\cdot(\tan\alpha + \tan\beta)$ is established with respect to the upper or lower gap L, the load flank angle $\alpha$, the stab flank angle $\beta$, and the axial gap $\delta$, and further more when the relationship H > 2L is established with respect to H and the upper or lower gap L for the case in which the interference H is set, a connected state in which the load flanks and the stab flanks are always contacting can be obtained in any situation.

Figure 2 shows this relationship. If the conditions are to the lower right on the page of the straight line $\delta = L\cdot(\tan\alpha + \tan\beta)$ (if $\delta$ is large), an axial gap $\delta$ remains between the stab flanks after connection of the threads. As the distance from the straight line increases, the axial gap $\delta$ increases. On the other hand, the conditions of the region in the upper left on the page of this relationship ($\delta$ is small) including the straight line $\delta = L\cdot(\tan\alpha + \tan\beta)$, i.e., those given by the following Equation (1)

$$\delta \leq L\cdot(\tan\alpha + \tan\beta) \tag{1}$$

indicate that contact between the stab flanks is achieved. As the distance from the straight line increases, contact between the stab flanks begins earlier during tightening. Thus, <u>solid</u> contact is achieved accompanying thread interference of (H - 2L') with a gap remaining at the thread crest, and the resistance to compression becomes larger.

In order to impart effective thread interference after thread connection, it is necessary that

$$L < H/2,$$

i.e., that

$$L \cdot (\tan\alpha + \tan\beta) < (H/2) \cdot (\tan\alpha + \tan\beta) \qquad (2)$$

Accordingly, from Equations (1) and (2), the necessary condition is that

$$\delta/(\tan\alpha + \tan\beta) \leq L < H/2 \qquad (3)$$

Even when the dimensions of a joint are such that the thread upper or lower gap L, the load flank angle $\alpha$, the stab flank angle $\beta$, and the axial gap $\delta$ between the thread ridge width of the male thread and the thread valley width of the female thread is in the region of Figure 2 in which $\delta > L \cdot (\tan\alpha + \tan\beta)$, if the male thread and the female thread are tightened with a sufficient tightening torque, there are cases in which the axial gap $\delta$ which should be present disappears. Thus, a substantially adequate level of resistance to compression is exhibited.

For example, in the case of a threaded joint having torque shoulder portions, if the tightening conditions are within the region of elastic deformation in the axial direction of the torque shoulder portions, due to strain accompanying elastic deformation of the pin lip portions, the value of the thread ridge width subtracted from the thread valley width of the thread (the value of the thread valley width minus the thread ridge width), i.e., the axial gap $\delta$ decreases. It is possible that the axial gap becomes essentially zero.

In addition, depending on conditions the axial gap $\delta$ decreases due to the amount of interference in the radial direction of the threads when the male thread and female thread have been tightened.

This is because the male thread deforms by shrinkage of its diameter and the female thread deforms by an increase in diameter by the amount of thread interference when the male thread and the female thread have been connected, and in accordance with Poisson's law, the male thread elongates in the axial direction and the female thread contracts in the axial direction. Namely, due to the relative deformation in the form of the axial elongation of the male thread and the axial contraction of the female thread, the gap between the thread ridge width of the male thread and the thread valley width of the female thread decreases. In the vicinity of the boundary line expressed by the above-described $\delta = L \cdot (\tan\alpha + \tan\beta)$, it is possible for the value of the axial gap $\delta$ to essentially become zero.

In this case, the sum of the elongation of the male thread and the contraction of the female thread is a value which is influenced by the outer diameter, the wall thickness, and other dimensions of the pipe and box which form the joint, the mechanical properties of the material, and the effective thread interference at the time of connection. The boundary line $\delta = L \cdot (\tan\alpha + \tan\beta)$ showing the suitable range in Figure 2 is moved by just this sum in the direction of the horizontal axis (the $\delta$ axis), and the suitable range of the present invention is increased.

Examples

The effects of a joint with tapered threads according to the present invention will be described based on examples in conjunction with conventional examples and comparative examples.

(Example 1)

In order to manufacture threads having contact between both the load flanks and the stab flanks, as shown in Figure 3, for example, a situation was drawn in which in an already threadingly engaged state, both surfaces are contacting due to coincidence of the pitch radii or the like. Then, the dimensions of each part can be determined. At this time, if the thread shapes of the tapered male thread 1 and the tapered female thread 2 are made the same, the determination of dimensions becomes even easier.

As shown in Figures 4(a) and (b) and Figures 5(a) and (b), when the tapered male thread 1 and the tapered female thread 2 are separately designed and drawn, after determining the same basic shape and dimensions, the dimensions of each portion can be determined.

However, during actual manufacture, it is necessary to take dimensional tolerances during working into consideration. When determining the basic dimensions, manufacturing tolerances must be included.

A preferred embodiment of the present invention to form a joint with tapered threads will be illustrated. In the case of any of Figures 3 - 5, the relative relationship between the thread widths of the tapered male thread and the tapered female thread is the same. Thus, when the upper or lower gap L (mm), the load flank angle $\alpha$ (°), and the stab flank angle $\beta$(°) have the values shown below in Table 1, for example, the limit (the maximum allowable value) on the axial gap $\delta$ for each is a value as shown below in Table 2.

Accordingly, the maximum value of $\delta$ including tolerances can be set to a value no higher than this limit.

Table 1

|  | $\alpha(°)$ | $\beta(°)$ | L(mm) |
|---|---|---|---|
| Fig. 3 | 3 | 25 | 0.1016 |
| Fig. 4 | 0 | 45 | 0.5334 |
| Fig. 5 | 7 | 45 | 1.0414 |

Table 2

|  | Maximum allowable value of $\delta$(mm) |
|---|---|
| Fig. 3 | 0.0526 |
| Fig. 4 | 0.0533 |
| Fig. 5 | 0.1169 |

As a result, a value which includes the tolerances of the thread ridge width and thread valley width of the tapered male thread and the tapered female thread, i.e., the maximum value $\delta$ of the axial gap which is formed along the widthwise direction of the threads is obtained. Conversely, when the maximum value $\delta$ of the gap in the axial direction needs to be 0.1mm, for example, due to the limit on the manufacturing tolerances, the gap between the crests and the roots of the threads, i.e., the minimum value of the "upper or lower gap L" of the thread becomes a value like that shown in Table 3 from the relational equation of the present invention.

Namely, by applying the relational equation of the present invention, the limit on the baseline axial gap $\delta$ can be easily found from the upper or lower gap L, or the limit on the baseline upper or lower gap L can be easily found from the maximum value $\delta$ of the axial gap.

Table 3

|  | $\delta$ | Minimum value of L (mm) |
|---|---|---|
| Fig. 3 | 0.1 | 0.193 |
| Fig. 4 | 0.1 | 0.100 |
| Fig. 5 | 0.1 | 0.089 |

(Example 2)

This illustrates the case in which the relational equation of the present invention (Sample No. 1) is satisfied and the case including a range which does not satisfy it (Sample No. 2). The dimensions of each portion pertaining to the equation for Sample No. 1 and Sample No. 2 and $L\cdot(\tan\alpha + \tan\beta)$ are as shown below in Table 4.

Table 4

| Sample | $\alpha$ (°) | $\beta$ (°) | L (mm) (Min) | $\delta$ (mm) (Max) | $L \cdot (\tan\alpha + \tan\beta)$ (Min) | Set thread interference H (mm) | Effective thread interference H' (mm) |
|---|---|---|---|---|---|---|---|
| No. 1 | -3 | 35 | 0.10 | 0.06 | 0.06478 | 0.40 | 0.215 |
| No. 2 | -3 | 15 | 0.10 | 0.06 | 0.02155 | 0.40 | 0.20 |

Here, the values of L and $\delta$ including tolerances are L = 0.10 + 0.05/-0.0, and $\delta$ =0.03 ± 0.03.

Actual thread tolerance (H'): 0.40 - 2$\delta$/($\tan\alpha$ + $\tan\beta$) or 0.40 - 2L

Figures 6(a) and 6(b) are figures like those shown in Figure 2 for Samples No. 1 and No. 2 having the dimensions shown in Table 4.

The hatched regions in Figure 6 are regions taking tolerances into consideration. In this case, the maximum value of the axial gap δ is 0.06 mm, the minimum value is 0 mm, the maximum value of the upper or lower gap L of the thread is 0.15 mm, and the minimum value is 0.1 mm. (L = 0.10 mm + 0.05 mm/-0.0 mm, δ = 0.03 mm ± 0.03 mm).

In Figure 6(a) showing Sample No. 1, the value of L·(tanα + tanβ) is in the range of 0.0648 - 0.0972 mm, and the value of δ is in the range of 0.0- 0.06 mm. Thread interference is present, and the limit value of L·(tanα + tanβ) is determined based on the set thread interference of 0.40 mm to be 0.1296 using the value of H· (tanα + tanβ)/2.

Accordingly, in the case of Sample No. 1 which satisfies the relational equation of the present invention, within the range of all the manufacturing tolerances, the relationship among δ, L, α, and β is on the upper left side on the page (in the region in which δ is small) of the straight line δ = L·(tanα + tanβ), and both the load flanks and the stab flanks are always touching.

In Figure 6(b) showing Sample No. 2 which includes a region which does not satisfy the relational equation of the present invention, the value of L · (tanα + tanβ) is in the range of 0.0216 - 0.0323 mm, and the value of δ is in the range of 0.0- 0.06 mm, as in the case of No. 1. Since thread interference is present, the limit on L · (tanα + tanβ) is determined based on the set thread interference of 0.40 mm to be 0.0431 by calculating H · (tanα + tanβ)/2. As the value of L·(tanα + tanβ) becomes larger than this value, the thread interference essentially disappears.

Accordingly, depending on the actual values of L and δ, it is possible that the relationship among δ, L, α, and β is above and to the left on the page (in the region where δ is small) of the straight line δ = L·(tanα + tanβ), and that both the load flanks and the stab flanks contact. However, even in these cases, a portion is on the lower right region of the page (in the region where δ is large), and a gap is formed between the stab flanks.

With an actual thread, it is possible to set the value δ of the axial gap so as to be negative, but even in this case, the situation is the same. Namely, if the conditions are on the upper left side (in the region where δ is small) of the straight line δ = L(tanα + tanβ), the load flanks and the stab flanks both always contact. Conversely, if the conditions become those in the region on the lower right side (the region where δ is large), a gap is formed between the stab flanks.

However, setting δ so as to be negative results in a large tendency for the effective thread interference H' to become too large, as can be seen by the expression H - 2δ/(tanα + tanβ) for H'. Therefore, it is necessary for the previously set value H to be set on the low side, and this changes depending on the possible region for δ.

As already stated, even in the region of δ > L·(tanα + tanβ) in Figure 2, when the male thread and female thread are tightened with a sufficient tightening torque, an axial gap δ which should be present disappears. A substantially adequate level of resistance to compression is exhibited. Compared to the region for δ prescribed by the relationship expressed by δ ≤ L·(tanα + tanβ), the extent to which the range for the value of δ can be expanded is evaluated by the following calculations.

(a) The case of a threaded joint having a torque shoulder portion:

In the case of a joint in which the tip of the pin lip portion forms a torque shoulder and the length of the pin lip portion is 10 mm, taking into consideration that the strain within elastic deformation is 0.1 - 0.2%, it is expected that the suitable range for the value of δ will be expanded by 0.01 - 0.02 mm beyond the region of δ ≤ L · (tanα + tanβ) in Figure 2.

Namely, $D\delta_1$ = 0.01 - 0.02 mm.

(b) The case of widthwise deformation based on radia interference between the male thread and the female thread:

If the interference between the male thread and the female thread is H, the corresponding pitch diameters (diameters) are $P_D$, the contraction of the diameter of the pin portion due to thread interference is hp, the expansion of the diameter of the box portion is hb, the pin portion and the box portion are made of the same material, and Poisson's ratio thereof is (1/m), then the strain εp and εb of the male thread and the female thread in the axial direction is approximately expressed as shown below:

$$\varepsilon p = (hp/PD)\cdot(1/m) \dots \text{(elongation)}$$

$$\varepsilon b = (hb/PD)\cdot(1/m) \dots \text{(contraction)}$$

The total strain in the axial direction is ε = εp + εb, and H = hp + hb, so the total strain in the axial direction is expressed by the following equation.

$$\varepsilon = (H/PD)\cdot(1/m)$$

Accordingly, if the thread pitch is P, then the reduction Dδ2 in the thread ridge width of the male thread and the thread valley width of the female thread in the axial direction per one thread turn is as follows:

$$D\delta_2 = (H/PD) \cdot (1/m) \cdot P$$

If H = 0.3 mm, PD = 176.5 mm, P = 5.08 mm, and 1/m = 0.3, then

$$D\delta_2 = 0.0026 \text{ mm.}$$

This value is of course proportional to the thread interference.

(Example 3)

Using API steel pipes and plain pipes for a box with a nominal outer diameter of 7 inches and nominal wall thickness of 0.408 inches (test material: API 5CT N-80, yield strength of $601.72 \times 10^6$ Pa, ultimate tensile strength of $725.2 \times 10^6$ Pa), special threaded joints having the thread shape of Sample No. 1 and No. 2 in Example 2 and the same taper were manufactured. The shapes of the metal seal portions and the torque-stopping shoulder portions were all the same. The properties of joints with tapered threads manufactured in this manner were compared. The conditions of the threads subjected to tests were as shown below in Table 5.

Table 5

| Sample | Thread type | δ (mm) | L (mm) | α(°) | β (°) | L · (tan α+tan β) | H | H' | Type of contact | Remarks |
|---|---|---|---|---|---|---|---|---|---|---|
| A | No.1 | 0.05 | 0.135 | -3 | 35 | 0.0875 | 0.4 | 0.246 | Both flanks touching | ○ |
| B | No.1 | 0.03 | 0.120 | -3 | 35 | 0.0777 | 0.4 | 0.307 | Both flanks touching | ○ |
| C | No.2 | 0.05 | 0.110 | -3 | 15 | 0.0237 | 0.4 | 0.180 | Stab flanks not touching | × |
| D | No.2 | 0.04 | 0.105 | -3 | 15 | 0.0226 | 0.4 | 0.190 | Stab flanks not touching | × |
| E | No.3 | 0.09 | 0.110 | -3 | 35 | 0.0713 | 0.4 | 0.180 | Stab flanks not touching | × |
| F | No.4 | -0.02 | 0.125 | -3 | 15 | 0.0269 | 0.1 | 0.286 | Both flanks touching | ○ |
| G | No.5 | -0.05 | 0.115 | -3 | 35 | 0.0745 | 0.2 | 0.277 | Both flanks touching | ○ |

H' = H - 2 δ/(tan α+tan β) ··· δ≤L (tan α+tan β)
= H - 2 · L      δ>L (tan α+tan β)
○ = invention, × = comparative

A joint with tapered threads having threads with the above conditions was assembled by a method in which a prescribed torque was applied after contact between torque-limiting stoppers of a tapered male thread and a tapered female thread. A standard dope meeting API modified standards was applied. After make-up, a combined test was performed, followed by breakdown and investigation.

The combined test was carried out in the following order as shown in Figure 7.

(1) A tensile load of up to 95% of the pipe body strength was applied (load point 1), and while maintaining this load, an internal pressure was applied, and the conditions were set to 95% of a Von Mises Ellipse (stress ellipse) (VME) (load point 2).

(2) The internal pressure was adjusted so as to maintain a condition of VME 95% was adjusted, and the tensile load was changed to 80% (load point 3), 60% (load point 4), and 0% (load point 5). In addition, while maintaining the condition of VME 95%, a compressive load of 50% (load point 6), 90% (load point 7), and 100% (load point 8) was applied, and the conditions were made pure compression with a pressure of 0.

(3) The axial force was again returned to zero (load point 9).

(4) A compressive load of up to 95% of the pipe body strength was applied (load point 10), and while applying a load condition of VME 95% from this 95% load point, the compressive load was reduced from 95% to 90% (load point 11), 50% (load point 12), and 0% (load point 13).

(5) While applying the same load conditions of VME 95%, a tensile load of 60% (load point 14), 80% (load point 15), and 95% (load point 16) was applied.

(6) The internal pressure was reduced, a pure axial force of 95% (load point 17) was applied, then the axial force was also reduced, and the total load was removed (load point 18).

(7) The above (1) - (6) were repeated.

(8) As a rule, the holding time at each load point was 15 minutes per location, but it was 1 minute for load points 1, 8, 9, 10, and 17.

The test results are shown in the following Table 6. For Samples A and B which satisfied the relational equation of the present invention, the test was successfully completed with no problem for either one.

Table 6

| Sample | Thread shape | Test results |
| --- | --- | --- |
| A | Sample No. 1 | Successfully completed |
| B | Sample No. 1 | Successfully completed |
| C | Sample No. 2 | Leak at load point 15 (in first cycle) |
| D | Sample No. 2 | Leak at load point 15 (in first cycle) |
| E | Sample No. 3 | Leak at load point 14 |
| F | Sample No. 4 | Successfully completed |
| G | Sample No. 5 | Successfully completed |

On the other hand, with Samples C and D which did not satisfy the relational equation of the present invention, after a compressive load was applied, leakage occurred under the conditions of tension and internal pressure. This is thought to be because the threaded joints could not withstand a high compressive force and the shoulder portions near the metal seal portions deformed, and as a result this led to a leak under tensile load conditions.

In addition, although the thread material of Sample E was the same as for Samples A and B, only the thread widthwise gap was large, and this led to leakage, as in Samples C and D.

Samples F and G had a negative axial gap $\delta$, but the effective thread interference after tightening was a value on the same level as for Samples A and B. There was no problem in the combined test, and not only were the test results good, but there was no galling. Namely, even if the value $\delta$ of the axial gap is negative, the effects of the present invention can be obtained by adjusting the value of the effective thread interference.

As in the above-described examples, a joint with tapered threads according to the present invention is not limited to one having a stopper in the vicinity of threads for the purpose of limiting the amount of threaded engagement (the amount of tightening) of the male thread and female thread, or a metal seal for guaranteeing the sealing properties of the thread connecting portion. The present invention of course can also be applied to a joint having only threads or one having only a torque stopper attached to the threads, or to one having only a metal seal portion attached to the threads.

Industrial Applicability

With a joint with tapered threads according to the present invention, a thread having a structure in which the load flanks and the stab flanks of the threads always contact can be easily manufactured. As a result, a thread having sufficient resistance against not only tensile force but also against compressive force can be provided with certainty within the manufacturing tolerances therefor. Accordingly, even if a large compressive force is repeatedly experienced, particularly in a special threaded joint for oil well pipes having a metal seal portion, a joint having a high reliability in which the sealing ability is not thereby damaged can be obtained.

**Claims**

1.  A joint with tapered threads comprising a tapered male thread and a tapered female thread threadingly engaged with each other, the thread shapes of the male and female thread having a constant cross section over the entire length of a complete thread portion, **characterized in that** the joint is defined by the relationship shown by the following equation:

$$\delta \leq L \cdot (\tan\alpha + \tan\beta)$$

wherein

L (mm): gap size of the smaller of the gap $L_1$ (mm) between the crest of the tapered male thread and the root of the tapered female thread, and the gap $L_2$ (mm) between the root of the tapered male thread and the crest of the tapered female thread

$\alpha(°)$: load flank angle

$\beta(°)$: stab flank angle

$\delta$(mm): maximum of the difference between the thread ridge width of the tapered male thread and the thread valley width of the tapered female thread threadingly engaged therewith and the difference between the thread ridge width of the tapered female thread and the thread valley width of the tapered male thread threadingly engaged therewith.

2.  A joint with tapered threads as set forth in claim 1, **characterized in that** the value L (mm) of the gap between the root and the crest of the threads, and the difference $\delta$ (mm) between the thread ridge width and the thread valley width of the threads are within the respective ranges from the minimum value to the maximum value taking into consideration manufacturing tolerances.

3.  A joint with tapered threads as set forth in claim 1 or claim 2, **characterized in that** the value $\delta$ (mm), including tolerances, of the thread ridge width subtracted from the thread valley width of the thread is a negative value, and the effective thread interference H' (mm) is within a range that gives a stress less than the yield strength of the material forming the threads in any portion of the tapered male thread and the tapered female thread.

4.  A joint with tapered threads comprising a tapered male thread and a tapered female thread threadingly engaged with each other, the thread shapes of the male and female threads having a constant cross section over the entire length of a complete thread portion, and the thread ridge width uniformly decreasing from the root to the crest of the threads, **characterized in that** the joint is defined by the relationship shown by the following equation:

$$\delta \leq L \cdot (\tan\alpha + \tan\beta)$$

wherein

L (mm): gap size of the smaller of the gap $L_1$ (mm) between the crest of the tapered male thread and the root of the tapered female thread, and the gap $L_2$ (mm) between the root of the tapered male thread and the crest of the tapered female thread

$\alpha(°)$: load flank angle

$\beta(°)$: stab flank angle

$\delta$(mm): value of the thread ridge width of the tapered male thread subtracted from the thread valley width of the tapered female thread threadingly engaged therewith, or the thread ridge width of the tapered female thread subtracted from the thread valley width of the tapered male thread threadingly engaged therewith.

5. A joint with tapered threads as set forth in claim 4 **characterized in that** the value L (mm) of the gap between the root and the crest of the threads, and the value $\delta$ (mm) of the thread ridge width subtracted from the thread valley width of the threads are within the respective ranges from the minimum value to the maximum value taking into consideration manufacturing tolerances.

6. A joint with tapered threads as set forth in claim 4, **characterized in that** the value $\delta$ (mm) of the thread ridge width subtracted from the thread valley width of the thread is a negative value, and the effective thread interference H' (mm) is within a range that gives a stress less than the yield strength of the material forming the threads in any portion of the tapered male thread and the tapered female thread.

7. A joint with tapered threads as set forth in claim 5, **characterized in that** the value $\delta$ (mm) of the thread ridge width subtracted from the thread valley width of the thread is a negative value, and the effective thread interference H' (mm) is within a range that gives a stress less than the yield strength of the material forming the threads in any portion of the tapered male thread and the tapered female thread.

8. A joint with tapered threads as set forth in any of claims 4 - 7, **characterized in that** the tapered male thread and the tapered female thread have a metal seal portion, and the effective thread interference H' (mm) is at most the interference of the metal seal portion.

9. A joint with tapered threads comprising a tapered male thread and a tapered female thread threadingly engaged with each other, the thread shapes of the male and female having a constant cross section over the entire length of a complete thread portion, and the thread ridge width uniformly decreasing from the root to the crest of the threads, **characterized in that** the joint satisfies the relationship shown by the following equation:

$$\delta \leq L \cdot (\tan\alpha + \tan\beta) + D\delta_1$$

with $D\delta_1$ being a positive value when $\delta$ decreases,
wherein

| | |
|---|---|
| L (mm): | gap size of the smaller of the gap $L_1$ (mm) between the crest of the tapered male thread and the root of the tapered female thread, and the gap $L_2$ (mm) between the root of the tapered male thread and the crest of the tapered female thread, including manufacturing tolerances |
| $\alpha(°)$: | load flank angle |
| $\beta(°)$: | stab flank angle |
| $\delta$(mm): | value of the thread ridge width of the tapered male thread subtracted from the thread valley width of the tapered female thread threadingly engaged therewith, or the thread ridge width of the tapered female thread subtracted from the thread valley width of the tapered male thread threadingly engaged therewith including manufacturing tolerances. |
| $D\delta_1$ (mm): | decrease in $\delta$ due to elastic deformation in the axial direction of a thread lip portion caused by contact between torque shoulder portions when the threads are screwed together. |

10. A joint with tapered threads comprising a tapered male thread and a tapered female thread threadingly engaged with each other, the thread shapes of the male and female threads having a constant cross section over the entire length of a complete thread portion, and the thread ridge width uniformly decreasing from the root to the crest of the threads, **characterized in that** the joint satisfies the relationship shown by the following equation:

$$\delta \leq L \cdot (\tan\alpha + \tan\beta) + D\delta_2$$

with $D\delta_2$ being a positive value when $\delta$ decreases,
wherein

| | |
|---|---|
| L (mm): | gap size of the smaller of the gap $L_1$ (mm) between the crest of the tapered male thread and the root of the tapered female thread, and the gap $L_2$ (mm) between the root of the tapered male thread and the crest of the tapered female thread, including manufacturing tolerances |
| $\alpha(°)$: | load flank angle |
| $\beta(°)$: | stab flank angle |

$\delta$(mm):     value of the the thread ridge width of the tapered male thread subtracted from the thread valley width of the tapered female thread threadingly engaged therewith, or the thread ridge width of the tapered female thread subtracted from the thread valley width of the tapered male thread threadingly engaged therewith, including manufacturing tolerances

$D\delta_2$ (mm):     decrease in $\delta$ due to elastic deformation of the thread in the axial direction caused by elastic deformation in the radial direction of the threads when the threads are screwed together.

# *Fig. 1*

(a)

(b)

## Fig. 2

$$\frac{H}{2}(\tan\alpha + \tan\beta) \qquad \delta = L(\tan\alpha + \tan\beta)$$

RESISTANCE TO
COMPRESSION
INCREASES

AXIAL GAP INCREASES

y-axis: $L(\tan\alpha + \tan\beta)$ (mm), 0.1

x-axis: AXIAL GAP $\delta$ (mm), 0, 0.05, 0.1

## Fig. 3

# Fig. 4

(a)

(b)

# *Fig.  5*

(a)

(b)

# *Fig. 6*

(a)

< SAMPLE No.1 >

(b)

< SAMPLE No.2 >

# Fig. 7

| INTERNATIONAL SEARCH REPORT | | International application No. |
|---|---|---|
| | | PCT/JP01/04798 |

**A. CLASSIFICATION OF SUBJECT MATTER**
Int.Cl$^7$  F16L15/06

According to International Patent Classification (IPC) or to both national classification and IPC

**B. FIELDS SEARCHED**

Minimum documentation searched (classification system followed by classification symbols)
Int.Cl$^7$  F16L15/00-15/08

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-294650 A (NKK Corporation), 29 October, 1999 (29.10.99), Full text; Figs. 1 to 10 | 1-7,9-10 |
| Y | & WO 99/53232 A1    & US 6174000 A | 8 |
| X | JP 6-281061 A (Sumitomo Metal Industries, Ltd.), 07 October, 1994 (07.10.94), Full text; Figs. 1 to 7  (Family: none) | 1-7,9-10 |
| Y | | 8 |
| Y | JP 10-148281 A (Kawasaki Steel Corporation), 02 June, 1998 (02.06.98), Full text; Figs. 1 to 8  (Family: none) | 8 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 September, 2001 (03.09.01) | 25 September, 2001 (25.09.01) |

| Name and mailing address of the ISA/ | Authorized officer |
|---|---|
| Japanese Patent Office | |
| Facsimile No. | Telephone No. |

Form PCT/ISA/210 (second sheet) (July 1992)